# EUROPEAN PATENT APPLICATION

(11) **EP 1 278 096 A2**
(43) Date of publication of application: **22.01.2003**
(21) Application number: 02090249.0
(22) Date of filing: 12.07.2002
(51) Int. Cl.: G02F 1/1335

(54) **Liquid crystal display device**

(30) Priority: 16.07.2001 JP 2001214937
(71) Applicant: NEC CORPORATION, Tokyo (JP)
(72) Inventor: Fujii, Gen, c/o NEC Corporation, Tokyo (JP)
(74) Representative: Patentanwälte Wenzel & Kalkoff

(57) **Abstract**

A liquid crystal display device (1) is constructed such that a polarizer (5) and a reflection polarizer (7) are bonded in a specific order on the back face of a liquid crystal display panel by using a diffusing adhesive material (6). Light transmitted through the polarizer (5) and from the front face of the liquid crystal display device is diffused by the diffusing adhesive material (6) and is incident on the reflection polarizer (7). In this case, a geometric angle between the transmission axis of the polarizer (5) and that of the reflection polarizer (7) is made ranging from 0° to 90° excluding 0°.

## Description

### BACKGROUND OF THE INVENTION

### 1. Field of the Invention

The present invention relates to a liquid crystal display device, and more particularly to a liquid crystal display device in which utilization efficiency of external light can be improved when a display is used under a bright environment, such as sunlight, where there is a considerable amount of reflected and scattered ambient light.

### 2. Description of the Related Art

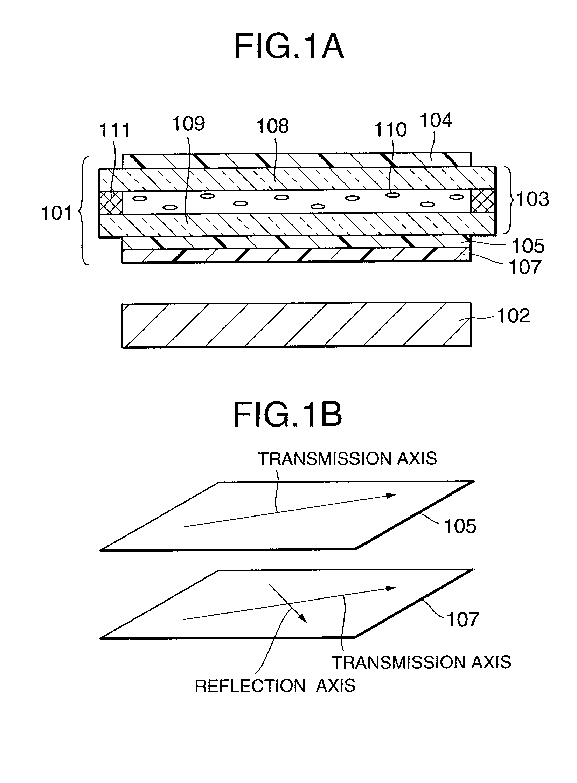

FIG. 1A is a cross sectional view of a conventional liquid crystal display device. A liquid crystal display unit 101 is composed of a liquid crystal cell 103, a polarizer 104 located on the front surface of the liquid crystal cell 103, a polarizer 105 located on the back surface of the liquid crystal cell 103 and a reflection polarizer 107 located on the back surface of the polarizer 105. As shown in FIG. 1B, the reflection polarizer 107 is located such that the transmission axis thereof is substantially aligned with that of the polarizer 105.

The liquid crystal cell 103 is constructed so that a transparent electrode is provided on an inner surface of both or either of a pair of transparent substrates 108 and 109 which are bonded via a sealing agent 111 and a liquid crystal layer 110 is filled into a space surrounded by the transparent substrates 108, 109 and the sealing agent 111. A light irradiation unit 102 emits light to a back surface of the liquid crystal display unit 101.

In a transmission type liquid crystal display device having the light irradiation unit 102 provided on the back surface of such a liquid crystal display unit 101, visibility unfavorably becomes low when viewing images to be displayed under a bright environment, such as sunlight, where there is a considerable amount of reflected and scattered ambient light. This is because an external light is reflected from the surface of the liquid crystal display unit and its brightness cannot be ignored as compared with that of a light emitted from the light irradiation unit.

In order to reduce an amount of an external light reflected by the surface of the liquid crystal display unit, AR (anti-reflection) processing or the like is performed with respect to the surface of the polarizer 104, which operation is not sufficient to reduce an amount of the reflected external light. Thus, it is required to effectively utilize an external light to obtain high brightness such that the eternal light is reflected from the inner portion of the liquid crystal display device and used for display together with a light emitted from the light irradiation unit.

However, in the above-described conventional example, an external light incident on the front surface of the liquid crystal display unit 101 transmits through the polarizer 104, the liquid crystal cell 103 and the polarizer 105 to the reflection polarizer 107. In this case, since the direction of the transmission axis of the reflection polarizer 107 coincides with that of the polarizer 105, the external light transmits through the reflection polarizer 107 and is incident on the light irradiation unit 102 to be reflected by the surface of the light irradiation unit 102. When a sheet having a high reflectance is provided on the light irradiation unit 102 to enhance the reflection of external light from the surface of the light irradiation unit 102 and to thereby utilize external light with high efficiency, light emitted from the light irradiation unit 102 is attenuated. Furthermore, since the reflection from the surface of the light irradiation unit 102 is mainly due to specular reflection, the brightness of the liquid crystal display unit in a direction perpendicular thereto is hard to increase.

### SUMMARY OF THE INVENTION

A primary object of the present invention is to provide a liquid crystal display device capable of utilizing external light with high efficiency while suppressing attenuation of a light emitted from a light irradiation unit, in which visibility becomes high when viewing images to be displayed under a bright environment, such as sunlight, where there is a considerable amount of reflected and scattered ambient light and brightness in a direction perpendicular to a liquid crystal display unit is enhanced.

A liquid crystal display device according to a first aspect of the present invention includes two transparent substrates disposed to sandwich a liquid crystal therebetween, a front polarizer disposed on one of the two transparent substrates on a side thereof opposite the liquid crystal, a back polarizer disposed on the other of the two transparent substrates on a side thereof opposite the liquid crystal, a reflection polarizer disposed on the back polarizer on a side thereof opposite the other transparent substrate, and a light irradiation unit disposed on a side of the reflection polarizer opposite with respect to the other transparent substrate, in which the back polarizer and the reflection polarizer are disposed so as to make a geometric angle between a transmission axis of the back polarizer and a transmission axis of the reflection polarizer larger than 0° and equal to or smaller than 90°.

According to the liquid crystal display device of the first aspect of the invention, the angle between the transmission axis of the back polarizer and that of the reflection polarizer is made larger than 0° and equal to or smaller than 90°. Accordingly, a part of external light incident on a liquid crystal display unit is reflected by the reflection polarizer and then dedicates itself to displaying images together with light emitted from the light irradiation unit to the back surface of the liquid crystal display unit, thereby achieving high brightness of images to be displayed.

A liquid crystal display device according to a second aspect of the present invention includes two transparent substrates disposed to sandwich a liquid crystal therebetween, a front polarizer disposed on one of the two transparent substrates on a side thereof opposite the liquid crystal, a back polarizer disposed on the other of the two transparent substrates on a side thereof opposite the liquid crystal, a reflection polarizer disposed on the back polarizer on a side thereof opposite the other transparent substrate and a light irradiation unit disposed on a side of the reflection polarizer opposite with respect to the other transparent substrate, and is characterized in that the back polarizer and the reflection polarizer are bonded together through a diffusing adhesive material, which allows light transmitting therethrough to be diffused.

According to the liquid crystal display device of the second aspect of the invention, the back polarizer and the reflection polarizer are bonded together using a diffusing adhesive material. Accordingly, external light incident on a liquid crystal display unit is not only emitted therefrom based on specular reflection, in other words, in a direction symmetrical to the direction in which external light enters but also emitted being diffused, thereby achieving high brightness of images to be displayed in a direction perpendicular to the liquid crystal display unit.

A liquid crystal display device according to a third aspect of the present invention includes: two transparent substrates disposed to sandwich a liquid crystal therebetween, a front polarizer disposed on one of the two transparent substrates on a side thereof opposite the liquid crystal, a back polarizer disposed on the other of the two transparent substrates on a side thereof opposite the liquid crystal, a reflection polarizer disposed on the back polarizer on a side thereof opposite the other transparent substrate and a light irradiation unit disposed on a side of the reflection polarizer opposite with respect to the other transparent substrate, and is characterized in that the angle between the transmission axis of the back polarizer and that of the reflection polarizer is made larger than 0° and equal to or smaller than 90°, and the back polarizer and the reflection polarizer are bonded together through a diffusing adhesive material, which allows light transmitting therethrough to be diffused.

According to the liquid crystal display device of the third aspect of the invention, external light incident on a liquid crystal display unit is not only emitted therefrom based on specular reflection, in other words, in a direction symmetrical to the direction in which the external light enters, but is also emitted being diffused by the diffusing adhesive material, thereby achieving high brightness of images to be displayed also in a direction perpendicular to the liquid crystal display unit. In addition, when external light incident on the liquid crystal display unit is diffused by the diffusing adhesive material, external light incident on the reflection polarizer becomes light being diffused. Furthermore, since the angle between the transmission axis of the back polarizer and that of the reflection polarizer is made larger than 0° and equal to or smaller than 90°, a part of the external light incident on the liquid crystal display unit is reflected by the reflection polarizer and then dedicates itself to displaying images together with light emitted from the light irradiation unit to the back surface of the liquid crystal display unit, thereby achieving high brightness of images to be displayed.

### BRIEF DESCRIPTION OF THE DRAWINGS

FIG. 1A is a schematic cross sectional view of a conventional liquid crystal display device;
FIG. 1B is a schematic view indicating the relationship between transmission/reflection axes of one polarizer and transmission/reflection axes of the other;
FIG. 2A is a schematic cross sectional view of a liquid crystal display device according to an embodiment of the present invention;
FIG. 2B is a schematic view indicating the relationship between polarizing axes of two polarizers in the liquid crystal display device; and
FIG. 2C is a schematic cross sectional view showing a structure of a light irradiation unit in the liquid crystal display device.

### DETAILED DESCRIPTION OF THE PREFERRED EMBODIMENTS

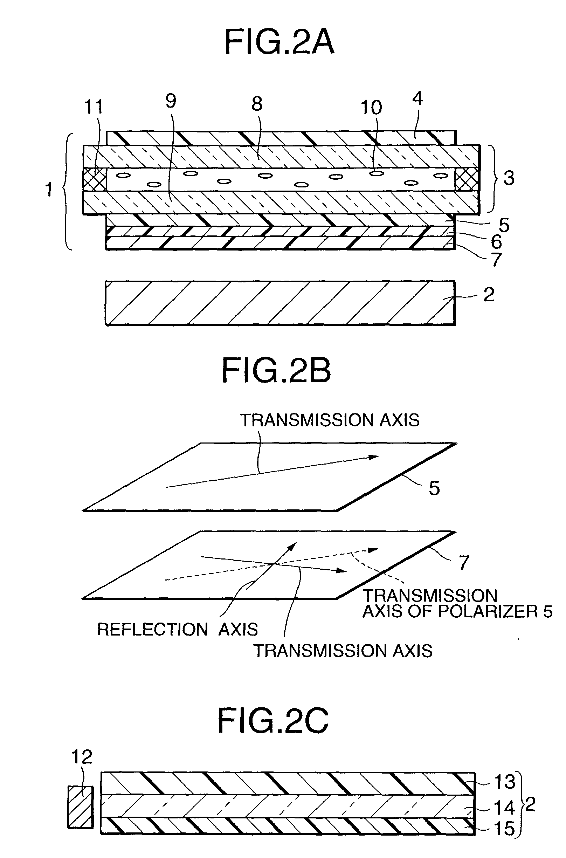

A liquid crystal display device of an embodiment of the present invention will be described with reference to FIGS. 2A, 2B and 2C.

FIG. 2A is a schematic cross sectional view in a situation where a liquid crystal display device of the present invention is cut across a plane that is perpendicular to a substrate. FIG. 2B schematically shows a relationship between polarizing axes of two polarizers disposed on a substrate on a side thereof on which a light irradiation unit is located in the liquid crystal display device. FIG. 2C schematically shows a light irradiation unit. The liquid crystal display device includes a liquid crystal display unit 1 and a light irradiation unit 2, each being constructed as follows. Note that hereinafter, a side on which the light irradiation unit 2 is located with respect to the liquid crystal display unit 1 is called a back face and a side opposite the back surface with respect to the liquid crystal display unit 1 is called a front face.

First, as shown in FIG. 2A, on the front face and back face of a liquid crystal cell 3 are disposed polarizers 4 and 5, respectively. A reflection polarizer 7 is disposed on the back face of the polarizer 5. On the side of the back face of the liquid crystal display unit 1the light irradiation unit 2 is disposed for emitting light to the liquid crystal display unit 1.

As shown in FIG. 2B, a geometric angle between a transmission axis of the polarizer 5 and that of the reflection polarizer 7 is made ranging from 0° to 90° excluding 0°. In addition, the polarizer 5 and the reflection polarizer 7 are bonded together using a diffusing adhesive material 6 for diffusing light transmitting therethrough. These polarizers may be disposed via a diffusing sheet for diffusing light transmitting therethrough instead of the diffusing adhesive material.

Since the transmission axis of the polarizer 5 and that of the reflection polarizer 7 are not made in parallel with each other, a polarizing component along the reflection axis of the reflection polarizer 7 is present in the external light that transmits through the front face of the liquid crystal display unit 1, the polarizer 4, the liquid crystal cell 3 and the polarizer 5 in this order to the reflection polarizer 7. Thus, external light is reflected from the reflection polarizer 7 and emitted to the front face of the liquid crystal display unit 1. Therefore, external light canbe utilized effectively. The diffusing adhesive material or the diffusion sheet serves to diffuse external light from the reflection polarizer 7 and increase a component of light emitted therefrom in a direction perpendicular to the liquid crystal display unit 1. Therefore, external light canbe effectively utilized by using only the conventional members without additional new members while dedicating itself to increasing brightness of images to be displayed in a direction perpendicular to the liquid crystal display unit.

As described above, the present invention is characterized in that:
(1) the geometric angle between the transmission axis of the polarizer disposed on the back face of the liquid crystal cell and that of the reflection polarizer disposed on the back face of the polarizer is made ranging from 0° to 90° excluding 0°;
(2) the polarizer disposed on the back face of the liquid crystal cell and the reflection polarizer disposed on the back face of the polarizer are bonded together using the diffusing adhesive material for diffusing light transmitting therethrough or disposed through the diffusing sheet for diffusing light transmitting therethrough; and
(3) the geometric angle between the transmission axis of the polarizer disposed on the back face of the liquid crystal cell and that of the reflection polarizer disposed on the back face of the polarizer is made ranging from 0° to 90° excluding 0°, and the polarizer and the reflection polarizer are bonded together using the diffusing adhesive material for diffusing a light transmitting therethrough, or disposed via the diffusing sheet for diffusing light transmitting therethrough.

The present invention will be described in more detail in the following.

As shown in FIG. 2A, the liquid crystal display unit 1 comprises the liquid crystal cell 3, the polarizer 4 disposed on the front face of the liquid crystal cell 3, the polarizer 5 disposed on the back face of the liquid crystal cell 3 and the reflection polarizer 7 bonded to the back face of the polarizer 5 through the diffusing adhesive material 6. The polarizer 4 is preferably processed such that the surface thereof is made to reflect light incident thereon to a reduced extent, which processing is typified such as by AR (anti-reflection) processing. As shown in FIG. 2B, the reflection polarizer 7 is characterized in that a transmission axis and a reflection axis thereof are substantially orthogonal to each other and the reflection polarizer allows light polarized along the transmission axis thereof to transmit therethrough and reflects light polarized along the reflection axis thereof. The polarizer 5 and the reflection polarizer 7 may be bonded together through the diffusing sheet instead of the diffusing adhesive material.

A geometric size of the diffusing adhesive material or the diffusing sheet is generally represented by a Hayes ratio ((an amount of light transmitting through an associated material while being diffused)/(a total amount of light transmitting through the associated material) × 100). The Hayes ratio associated with the diffusing adhesive material or the diffusing sheet employed in the present invention is preferably made ranging from 0% to 100% excluding 0%, and more preferably ranging from 20% to 80%. The reason is as follows. That is, when the Hayes ratio is high, light emitted from the light irradiation unit 2 is diffused to reduce the brightness at the surface of the liquid crystal display unit 1 and when the Hayes ratio is low, external light reflected from the reflection polarizer 7 is diffused to a reduced extent, thereby preventing the liquid crystal display device from increasing brightness in a direction perpendicular to liquid crystal display unit 1.

The liquid crystal cell 3 is constructed so that a pair of transparent substrates 8, 9 are bonded together via a sealant 11, a transparent electrodeis disposed on an inner surface of one of the transparent substrates 8, 9, and a liquid crystal layer 10 is filled into a space enclosed by the transparent substrates 8, 9, and the sealant 11. The liquid crystal cell may be realized by employing a TN (twisted nematic) type, an IPS (inplane switching) type, a VA (vertical align) type or an OCB (optical compensated bend) type.

FIG. 2C shows one embodiment of the light irradiation unit 2. The light irradiation unit 2 comprises an LED (light emitting diode) 12, a light guide plate 14, a light collection sheet 13 disposed on the light guide plate 14 and a reflection sheet 15 disposed under the light guide plate 14, and is configured to emit light to the back face of the liquid crystal display unit 1.

According to the present invention, as shown in FIG. 2B, the polarizer 5 and the reflection polarizer 7 are disposed such that the geometric angle between the transmission axes of those polarizers is made ranging from 0° to 90° excluding 0°.

When the angle between the transmission axis of the reflection polarizer 7 and that of the polarizer 5 becomes large, external light incident on the liquid crystal display unit 1 is reflected by the reflection polarizer 7 to a larger extent and as a result, the liquid crystal display device utilizes an external light with high efficiency. Contrary to it, light emitted from the light irradiation unit 2 is absorbed by the polarizer 5 to a larger extent and as a result, the liquid crystal display device utilizes light emitted from the light irradiation unit 2 with low efficiency. Accordingly, it can be concluded that the angle between the transmission axis of the reflection polarizer 7 and that of the polarizer 5 is preferably made ranging from 10° to 40°.

External light incident on the liquid crystal display unit 1 moves as follows. That is, the light polarized along the axis perpendicular to the transmission axis of the polarizer 4 is absorbed by the polarizer 4 and the light polarized along the transmission axis of the polarizer 4 transmits through the polarizer 4 and is incident on the liquid crystal cell 3. The light incident on the liquid crystal cell is polarized depending on an alignment state of a liquid crystal molecule, which changes in accordance with a voltage applied to the transparent electrodes and then is incident on the polarizer 5. The light incident on the polarizer 5 moves such that the light polarized along the axis perpendicular to the transmission axis of the polarizer 5 is absorbed by the polarizer 5 and the light polarized along the transmission axis of the polarizer 5 transmits through the polarizer 5 and is incident on the liquid crystal cell 3.

According to the construction of this embodiment, the reflection polarizer 7 and the polarizer 5 are bonded together via the diffusing adhesive material 6, and therefore, light transmitted through the polarizer 5 is diffused by the diffusing adhesive material 6 and is incident on the reflection polarizer 7. Since the angle between the transmission axis of the polarizer 5 and that of the reflection polarizer 7 is made ranging from 0° to 90° excluding 0°, light transmitting through the polarizer 5 includes two components, i. e., light polarized along the transmission axis of the polarizer 7 and light polarized along the axis reflection axis (perpendicular to the transmission axis) of the polarizer 7, and the former transmits through the polarizer 7 and then is incident on the light irradiation unit, and the latter is reflected by the polarizer 7 and diffused by the diffusing adhesive material 6 and then is incident on the polarizer 5.

According to the liquid crystal display device of the present invention, a part of external light incident on the liquid crystal display unit 1 is reflected by the reflection polarizer dedicated to displaying images in corporation with light emitted from the light irradiation unit to the back surface of the liquid crystal display unit, thereby achieving high brightness of images to be displayed. In addition, employing the diffusing adhesive material makes an external light incident on the liquid crystal display unit not only emitted in accordance with specular reflection direction, in other words, in a direction symmetrical to the direction in which the external light enters, but also emitted while being diffused, thereby achieving high brightness of images to be displayed in a direction perpendicular to the liquid crystal display unit.

## Claims

1. A liquid crystal display device comprising:
two transparent substrates disposed to sandwich a liquid crystal therebetween;
a front polarizer disposed on one of said two transparent substrates on a side thereof opposite said liquid crystal;
a back polarizer disposed on the other of said two transparent substrates on a side thereof opposite said liquid crystal;
a reflection polarizer disposed on said back polarizer on a side thereof opposite the other of said two transparent substrates; and
a light irradiation unit disposed on a side of said reflection polarizer opposite with respect to the other of said two transparent substrates,
said back polarizer and said reflection polarizer being disposed so as to make a geometric angle between a transmission axis of said back polarizer and a transmission axis of said reflection polarizer larger than 0° and equal to or smaller than 90°.

2. The liquid crystal display device according to claim 1, wherein said back polarizer and said reflection polarizer are bonded together via an adhesive material for diffusing light transmitting therethrough.

3. The liquid crystal display device according to claim 1, wherein the geometric angle between the transmission axis of said back polarizer and the transmission axis of said reflection polarizer is made ranging from 10° to 40°.

4. The liquid crystal display device according to claim 2, wherein said adhesive material for diffusing light transmitting therethrough serves to make said light move in accordance with a formula represented by 0 < (an amount of a light transmitting through said adhesive material while being diffused)/(a total amount of a light transmitting through said adhesive material) × 100 □ 100.

5. A liquid crystal display device according to claim 4, wherein said adhesive material for diffusing a light transmitting therethrough serves to make said light move in accordance with a formula 20 □ (an amount of a light transmitting through said adhesive material while being diffused)/(a total amount of a light transmitting through said adhesive material) × 100 □ 80.

6. The liquid crystal display device according to claim 1, wherein said light irradiation unit is formed such that a light collection sheet, a light guide plate and a reflection sheet are disposed in order in a direction departing from said reflection polarizer for said light irradiation unit and is configured to introduce a light into said light guide plate and then emit light to said reflection polarizer.
